Europäisches Patentamt

European Patent Office

Office européen des brevets

(19)

(11) Publication number: **0 021 584**
**B1**

## (12) EUROPEAN PATENT SPECIFICATION

(45) Date of publication of patent specification: **28.03.84**

(21) Application number: **80301575.9**

(22) Date of filing: **14.05.80**

(51) Int. Cl.³: **B 60 P 3/30,** E 01 H 11/00,
B 08 B 7/04

(54) Motorised vehicle for effecting a spraying operation.

(30) Priority: **16.05.79 GB 7917055**

(43) Date of publication of application:
**07.01.81 Bulletin 81/1**

(45) Publication of the grant of the patent:
**28.03.84 Bulletin 84/13**

(84) Designated Contracting States:
**AT BE CH DE FR IT LI LU NL SE**

(56) References cited:
**DE - A - 2 210 124**
**FR - A - 2 225 027**
**GB - A - 1 054 258**
**LU - A - 65 072**
**US - A - 3 111 268**
**US - A - 3 459 373**
**US - A - 3 532 070**
**US - A - 3 943 635**

(73) Proprietor: Lee, Francis Henry
Little Stanneylands Farm Stanneylands Road
Wilmslow, Cheshire (GB)

(72) Inventor: Lee, Francis Henry
Little Stanneylands Farm Stanneylands Road
Wilmslow, Cheshire (GB)

(74) Representative: Massey, Alexander
MARKS & CLERK Scottish Life House Bridge
Street
Manchester, M3 3DP (GB)

Courier Press, Leamington Spa, England.

Motorised vehicle for effecting a spraying operation

The present invention relates to a vehicle for effecting a spraying operation onto an elongate structure, e.g. a roadway crash barrier, as the vehicle travels alongside said structure.

Many roadways are provided with crash barriers for safety purposes and/or for marking the line of the road. It is desirable that these barriers should be clearly visible to a motorist, but in practice they rapidly become dirty and may be difficult to see.

US Patent No. 3 459 373 describes a highway maintenance vehicle for effecting a spraying operation onto a highway guardrail as the vehicle travels alongside said guardrail. The vehicle comprises an arm extendible transversely of the vehicle and provided with spray means for effecting said spraying operation and associated with means for following the elongate structure. The vehicle has a tank for holding a medium to be sprayed and also means for supplying said medium under pressure to the spray means.

The spray means are mounted on a guide box structure which includes a contoured roller for engagement against the guardrail for guiding the spray means. The box structure is positioned in the vicinity of the guardrail by horizontal and vertical positioning cylinders which are simply extended to position the roller against the guardrail prior to commencement of the spraying operation.

The apparatus described in US Patent No. 3 459 373 is intended particularly for spraying paint onto the highway guardrail but also describes the simultaneous spraying of weed killer on the surrounding ground area.

U.K. Patent No. 1 054 258 describes an apparatus for cleaning the guide planks of highways as the vehicle travels alongside the guide plank. The apparatus comprises a rotary brush which may be associated with a liquid spray means for spraying water onto the guide plank forwardly of the brush to loosen dirt.

According to the present invention there is provided a motorised vehicle for effecting a spraying operation onto an elongate structure as the vehicle travels alongside said structure, the vehicle comprising an arm extendable transversely of the vehicle and provided with spray means for effecting said spraying operation associated with means for following the elongate structure, a tank for holding a medium to be sprayed by the spray means, and means for supplying said medium under pressure to the spray means characterised in that the means for following the elongate structure is mounted on a trailing linkage biased, in use of the vehicle towards the elongate structure and movable between control position limits relative to the end of the arm and that said linkage is adapted to control extension or retraction of the arm when said position limits are reached.

In the vehicle of the invention the trailing linkage is movable between control position limits and operable to control the extension or retraction of the arm as necessary when such control position limits are reached or exceeded thereby to enable the spray means to follow the unevenness or undulations of an elongate structure being sprayed. Thus limited degrees of undulation of the structure are accommodated and followed by movement of the trailing linkage while large magnitude undulations are accommodated and followed by the extension or retraction of the extendable arm under the control of the trailing linkage.

The invention will be further described by way of example only with reference to the accompanying drawings, in which:—

Fig. 1 is a side view of one embodiment of vehicle in accordance with the invention for use in cleaning and/or painting a continuous/length of roadway crash barrier; and

Fig. 2 is a plan view of the vehicle shown in Fig. 1.

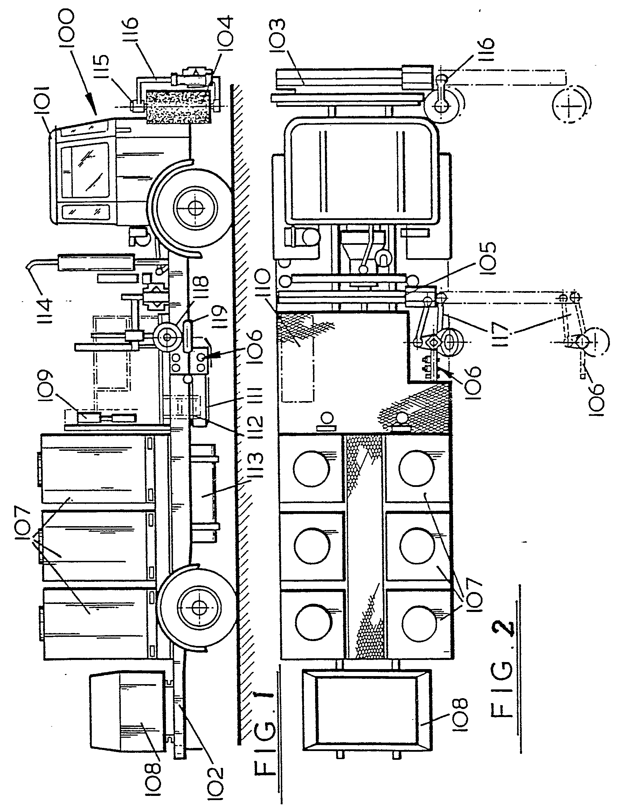

Fig. 1 and 2 show a second embodiment of vehicle in accordance with the invention. The vehicle illustrated in Fig. 1 is a right-hand drive lorry 100 with a driving cab 101 and a flat load carrying platform 102. The lorry 100 has a first telescopic arm 103 mounted on the front of the driving cab 101 and carrying a rotary brush 104, a second telescopic arm 105 mounted behind the driving cab 101 and carrying a spraying head unit 106, a plurality of removable tanks 107 on the platform 102, an air compressor 108 also mounted on the platform 102, a paint spray unit 109, and a high pressure washing unit 110. Additionally the lorry 100 has such conventional fixtures as a spare wheel 111, an access ladder 112, a fuel tank 113, and an exhaust 114.

The rotary brush 104, which is driven by an air motor 115 is mounted on the telescopic arm 103 by means of a bracket arrangement 116 which is biased outwardly of the lorry 100. This biasing ensures that, when the brush 104 is being used to clean an elongate structure, it will always act with constant force against the structure, even if the line of the structure is not straight. The various positions between which the brush 104 may be moved by the biased bracket 116 are shown in dashed-lines in Fig. 2.

The second telescopic arm 105 carries the spraying head unit 106 on a trailing linkage unit 117 which incorporates an elongate structure follower arrangement including a wheel 118 disposed for rotation about a horizontal axis and a wheel 119 disposed for rotation about a vertical axis. The wheel 118 is for use where a box-section barrier is to be sprayed by the spraying head unit 106 (as described later) in which case the wheel 118 will run along the top of the box-section structure. Alternatively the wheel 119 is for use where the structure to be sprayed is of the Armco type (i.e. one of corrugated section) in which case the wheel 118 will run in a corrugation of the structure. In either case, the wheel 118 or 119 as the case may be acts as a structure follower.

In order that the spraying head unit 106 is always located the correct distance from the elongate structure being sprayed, it is necessary to ensure that the structure follower (wheel 118 or 119) always acts with constant force against the structure.

For this purpose, the trailing linkage 117 is associated with limit switches (not shown) and a control system (not shown) which are operative to extend or retract the arm 105 should the trailing linkage move more then a predetermined distance from its mean position. The application of the constant force is therefore achieved in two ways. Firstly, for minor deviations of the structure, the trailing linkage 117 moves slightly to ensure that the structure follower always applies a constant force to the structure without extension or retraction of the arm 105. Secondly, for larger deviations of the structure, the trailing linkage 117 will move by a greater amount and will move past the limit switches. The control system will then operate to extend or retract the arm 105 as necessary to ensure that the constant force is maintained.

The spray head unit 106 has three spray heads, one for paint, one for high pressure hot water and one for ballotini (reflective glass beads). It is of course possible to include additional spraying heads, e.g. a downwardly directed spray head one for spraying weedkiller.

The tanks 107 serve to store water, paint, ballotini and weedkiller as necessary. The tanks 107 are removable so that an empty tank may easily be lifted off the vehicle and replaced by a full tank.

A tank 107 holding paint will supply the paint through suitable tubing (not shown) to the paint spray unit 109 which will in turn supply the paint to the appropriate spraying head on the unit 106. Similarly, the high pressure washing unit 110 will be supplied with water from an associated tank 107.

Units will also be provided on the vehicle for supplying ballotini or weedkiller to the appropriate spray heads from the tanks 107.

The paint spray unit 109, the high pressure washing unit 110, the units for spraying ballotini and weedkiller, and also the air motor 115 are operated by the compressor. For this purpose, suitable air supply lines (not shown) and control units (not shown) will be provided.

It is of course possible to spray two colours of paint onto a structure using the vehicle of Figs. 1 and 2.

## Claims

1. A motorised vehicle (100) for effecting a spraying operation onto an elongate structure as the vehicle (100) travels alongside said structure, the vehicle (100) comprising an arm (105) extendable transversely of the vehicle (100) and provided with spray means (106) for effecting said spraying operation associated with means (118, 119) for following the elongate structure, a tank, (107) for holding a medium to be sprayed by the spray means (106) and means for supplying said medium under pressure to the spray means characterised in that the means (118, 119), for following the elongate structure is mounted on a trailing linkage (117) biased, in use of the vehicle (100) towards the elongate structure movable between control position limits relative to the end of the arm (105) and that said linkage (117) is adapted to control extension or retraction of the arm (105) when said position limits are reached.

2. A vehicle as claimed in claim 1 wherein said spray means (106) is for spraying paint.

3. A vehicle as claimed in claim 1 wherein said spray means (106) is for spraying high pressure hot water.

4. A vehicle as claimed in claim 1 wherein the extendible arm (105) is provided with a plurality of spray means (106) and the vehicle (100) has a plurality of tanks (107) each for holding a medium to be sprayed by one of said spray means (106).

5. A vehicle as claimed in claim 4 wherein one of said plurality of spray means (106) is downwardly directed and is for spraying weedkiller.

6. A vehicle as claimed in any one of claims 1 to 5 wherein the vehicle (100) is provided with a compressor (108) and the means for supplying said medium to the spray means (106) is operated by the compressor.

7. A vehicle as claimed in any one of claims 1 to 6 wherein the arm (105) is telescopic.

8. A vehicle as claimed in claim 1 wherein the means (118, 119) for following the elongate structure comprises two wheels mutually at right angles.

9. A vehicle as claimed in any one of claims 1 to 8 wherein the vehicle is provided with a second extendible arm (103) and said second arm is provided with a rotary cleaning brush (104).

10. A vehicle as claimed in claim 9 wherein the rotary cleaning brush (104) is mounted on a biased bracket assembly (116).

11. A vehicle as claimed in claim 9 or claim 10 wherein the rotary brush (104) is driven by an air motor (115).

12. A vehicle as claimed in any one of claims 1 to 11 wherein the or each tank (107) is removable.

## Revendications

1. Véhicule à moteur (100) pour effectuer une opération de pulvérisation sur une structure allongée tandis que le véhicule (100) se déplace le long de ladite structure, le véhicule (100) comprenant un bras (105) extensible transversalement au véhicule (100) et pourvu d'un moyen de pulvérisation (106) pour effectuer ladite opération de pulvérisation en association avec un moyen (118, 119) pour suivre la structure allongée, un réservoir (107) contenant un fluide à pulvériser par le moyen de pulvérisation (106) et un moyen pour amener ledit fluide sous pression à un moyen de pulvérisation caractérisé en ce que le moyen (118, 119), pour suivre la structure allongée, est monté sur une tringlerie arrière (117) sollicitée, pendant l'utilisation du véhicule (100) vers la structure allongée mobile entre des limites de position de contrôle par rapport à l'extrémité du bras (105) et en ce que ladite tringlerie (117) est adaptée à contrôler l'extension ou le retrait du bras (105) quand lesdites limites de position sont atteintes.

2. Véhicule selon la revendication 1 où ledit moyen de pulvérisation (106) est pour la pulvérisation de peinture.

3. Véhicule selon la revendication 1 où ledit moyen de pulvérisation (106) est pour la pulvérisation d'eau chaude à haute pression.

4. Véhicule selon la revendication 1 où le bras extensible (105) est pourvu d'un certain nombre de moyens de pulvérisation (106) et le véhicule (100) a un certain nombre de réservoirs (107), chacun pouvant contenir un fluide à pulvériser par l'un desdits moyens de pulvérisation (106).

5. Véhicule selon la revendication 4 où l'un desdits moyens de pulvérisation (106) est dirigé vers le bas et est prévu pour pulvériser de l'herbicide.

6. Véhicule selon l'une quelconque des revendications 1 à 5, où le véhicule (100) est pourvu d'un compresseur (108) et le moyen pour amener ledit fluide au moyen de pulvérisation (106) est commandé par le compresseur.

7. Véhicule selon l'une quelconque des revendications 1 à 6 où le bras (105) est télescopique.

8. Véhicule selon la revendication 1, où le moyen (118, 119) pour suivre la structure allongée, comprend deux roues mutuellement à angles droits.

9. Véhicule selon l'une quelconque des revendications 1 à 8, où le véhicule est pourvu d'un second bras extensible (103) et ledit second bras est pourvu d'une brosse rotative de nettoyage (104).

10. Véhicule selon la revendication 9 où la brosse rotative de nettoyage (104) est montée sur un ensemble sollicité de support (116).

11. Véhicule selon la revendication 9 ou 10, où la brosse rotative (104) est entraînée par un moteur pneumatique (115).

12. Véhicule selon l'une quelconque des revendications 1 à 11, où le réservoir ou bien chaque réservoir (107) est amovible.

**Patentansprüche**

1. Kraftfahrzeug (100) zur Durchführung von Sprüharbeiten auf eine längliche Struktur, wobei das Kraftfahrzeug (100) an dieser Struktur längsseits vorbeifährt, mit einem einen Arm (105), der quer zum Kraftfahrzeug (100) ausstreckbar ist, und mit einer Sprühvorrichtung (106) zur Durchführung der Sprüharbeiten, der mit einer Vorrichtung (118, 119) zum Folgen der länglichen Struktur verbunden ist, mit einem Tank (107) zur Aufnahme des von der Sprühvorrichtung (106) zu versprühenden Mittels und mit einer Vorrichtung zur Zufuhr des Mittels unter Druck zur Sprühvorrichtung, dadurch gekennzeichnet, daß die Vorrichtung (118, 119) zur Verfolgung der länglichen Struktur an einer Anhängerverbindung (117) befestigt ist, die bei Gebrauch des Kraftfahrzeugs (100) zur länglichen Struktur vorgespannt ist (und) zwischen Kontrollpositionsgrenzen bezüglich des Endes des Armes (105) bewegbar ist und daß die Verbindung (117) zur Steuerung des Ein- und Ausfahrens des Armes (105) eingerichtet ist, wenn die Positionsgrenzen erreicht sind.

2. Kraftfahrzeug nach Anspruch 1, dadurch gekennzeichnet, daß die Sprühvorrichtung (106) zum Aufsprühen von Farbe ausgebildet ist.

3. Kraftfahrzeug nach Anspruch 1, dadurch gekennzeichnet, daß die Sprühvorrichtung (106) zum Versprühen von Heißwasser unter hohem Druck ausgebildet ist.

4. Kraftfahrzeug nach Anspruch 1, dadurch gekennzeichnet, daß der ausfahrbare Arm (105) mit einer Vielzahl von Sprühvorrichtungen (106) versehen ist und das Kraftfahrzeug (100) eine Mehrzahl von Tanks (107) aufweist, in welchen sich je ein von einer der Sprühvorrichtungen (106) zu versprühendes Mittel befindet.

5. Kraftfahrzeug nach Anspruch 4, dadurch gekennzeichnet, daß eine der Mehrzahl von Sprühvorrichtungen (106) nach unten gerichtet und zum Versprühen eines Unkrautvertilgungsmittels ausgebildet ist.

6. Kraftfahrzeug nach einem der Ansprüche 1 bis 5, dadurch gekennzeichnet, daß das Kraftfahrzeug (100) einen Kompressor (108) aufweist und daß die Vorrichtung zum Zuführen des Mittels zur Sprühvorrichtung (106) von dem Kompressor betätigt wird.

7. Kraftfahrzeug nach einem der Ansprüche 1 bis 6, dadurch gekennzeichnet, daß der Arm (105) teleskopisch ausgebildet ist.

8. Kraftfahrzeug nach Anspruch 1, dadurch gekennzeichnet, daß die Vorrichtung (118, 119) zum Verfolgen der länglichen Struktur zwei Räder aufweist, welche zueinander im rechten Winkel angebracht sind.

9. Kraftfahrzeug nach einem der Ansprüche 1 bis 8, dadurch gekennzeichnet, daß das Fahrzeug einen zweiten ausstreckbaren Arm (103) aufweist und daß der zweite Arm mit einer rotierenden Reinigungsbürste (104) versehen ist.

10. Kraftfahrzeug nach Anspruch 9, dadurch gekennzeichnet, daß die rotierende Reinigungsbürste (104) auf einer vorgespannten Bügelanordnung (116) befestigt ist.

11. Kraftfahrzeug nach Anspruch 9 oder 10, dadurch gekennzeichnet, daß die Drehbürste (104) von einem Luftmotor (115) angetrieben ist.

12. Kraftfahrzeug nach einem der Ansprüche 1 bis 11, dadurch gekennzeichnet, daß der Tank oder jeder der Tanks (107) entfernbar ist.

FIG. 1

FIG. 2

0 021 584